# EUROPÄISCHE PATENTSCHRIFT

(11) **EP 2 927 598 B1**
(45) Veröffentlichungstag und Bekanntmachung des Hinweises auf die Patenterteilung: **19.12.2018**
(21) Anmeldenummer: 14162677.0
(22) Anmeldetag: 31.03.2014
(51) Int. Cl.: F23R 3/14, F23R 3/28

(54) **Verfahren zum Austauschen eines Swirlers**
Method for replacing a swirler
Procédé destiné à remplacer une coupelle à aubes rotatives

(43) Veröffentlichungstag der Anmeldung: 07.10.2015
(73) Patentinhaber: Siemens Aktiengesellschaft, 80333 München (DE)
(72) Erfinder: Möllenbeck, Peter, 12161 Berlin Tempelhof-Schöneberg (DE); Hauser, Thomas, 15366 Hönow (DE); von Schwander, Karsten, 16341 Panketal (DE)

(56) Entgegenhaltungen:
- EP-A1- 2 085 695
- EP-A1- 2 397 763
- EP-A2- 2 273 197
- US-A1- 2006 174 631

## Beschreibung

Die vorliegende Erfindung betrifft ein Verfahren zum Austauschen eines Swirlers eines Vormisch- oder Hautbrenners einer Brenneranordnung, wobei der Swirler über ein Brenngaszuführrohr und eine in diesem aufgenommene Brennölzuführleitung an eine Verteilerflanschplatte der Brenneranordnung angeschlossen ist.
Swirler der eingangs genannten Art sind im Stand der Technik in unterschiedlichen Ausgestaltungen bekannt. Sie dienen dazu, die von einem Verdichter zugeführte Verbrennungsluft zu verwirbeln und mit dem Brennstoff zu vermischen, der über das Brenngaszuführrohr und/oder die Brennölzuführleitung zugeführt wird. Hierzu umfassen Swirler einen Außenring, der um das freie Ende des Brenngaszuführrohrs angeordnet ist und zusammen mit diesem einen ringförmigen Strömungskanal für die verdichtete Verbrennungsluft definiert. Ferner umfassen Swirler sich zwischen dem Gaszuführrohr und dem Außenring erstreckende Swirlerschaufeln, welche die Verwirbelung der Verbrennungsluft bewirken. Der Strömungskanal ist über entsprechende Verbindungskanäle mit dem Brenngaszuführrohr einerseits und der Brennölzuführleitung andererseits verbunden, so dass der jeweilige Brennstoff in den Strömungskanal eingespritzt werden kann.

Der Austausch eines beschädigten Swirlers wird beispielsweise in der EP 2 273 197 A2 und der US 7,581,402 B2 erwähnt und ist in der Praxis sehr zeit- und kostenintensiv. Bei einem bekannten Verfahren werden das Brenngaszuführrohr und die darin aufgenommene Brennölzuführleitung unmittelbar an der Verteilerflanschplatte an der Heißseite abgetrennt. Gleiches gilt für die gesamte Brennstoffversorgung an der Kaltseite der Verteilerflanschplatte. Anschließend wird die Anordnung wieder neu aufgebaut, wobei lediglich die Verteilerflanschplatte wiederverwertet wird. Alle anderen Bauteile werden durch Neuteile ersetzt.

Ausgehend von diesem Stand der Technik ist es eine Aufgabe der vorliegenden Erfindung, ein alternatives Verfahren der eingangs genannten Art zu schaffen, das mit moderatem Zeit- und Kostenaufwand durchführbar ist.

Zur Lösung dieser Aufgabe schafft die vorliegende Erfindung ein Verfahren der eingangs genannten Art, das die Schritte aufweist:
a) Abtrennen des Swirlers, indem das Brenngaszuführrohr und die Brennölzuführleitung entlang einer ersten Trennebene nahe des Swirlers durchtrennt werden;
b) Entfernen des abgetrennten Swirlers;
c) Abtrennen eines Endabschnittes des verbliebenen Brenngaszuführrohrs, indem das verbliebene Brenngaszuführrohr entlang einer zweiten Trennebene durchtrennt wird, ohne dabei die Brennölzuführleitung zu durchtrennen;
d) Entfernen des abgetrennten Endabschnittes des Brenngaszuführrohrs;
e) Bereitstellen einer den in Schritt c) abgetrennten Endabschnitt des Brenngaszuführrohrs ersetzenden Hülse, die derart ausgebildet ist, dass sie zumindest teilweise auf das verbliebene Brenngaszuführrohr aufgeschoben oder in dieses eingeschoben werden kann;
f) Anordnen der Hülse auf oder in dem verbliebenen Brenngaszuführrohr;
g) Bereitstellen eines neuen Swirlers, von dem axial ein neuer Brenngaszuführrohrendabschnitt und ein neuer Brennölzuführleitungsendabschnitt vorstehen;
h) Stoffschlüssiges Verbinden der verbliebenen Brennölzuführleitung mit dem von dem neuen Swirler vorstehenden neuen Brennölzuführleitungsendabschnitt;
i) Anordnen der Hülse zwischen dem verbliebenen Brenngaszuführrohr und dem von dem neuen Swirler vorstehenden neuen Brenngaszuführrohrendabschnitt; und
j) Stoffschlüssiges Verbinden der Hülse mit dem verbliebenen Brenngaszuführrohr einerseits und mit dem axial von dem neuen Swirler vorstehenden neuen Brenngaszuführrohrendabschnitt andererseits.

Aufgrund der Tatsache, dass der in Schritt c) abgetrennte Endabschnitt des Brenngaszuführrohrs durch eine Hülse ersetzt wird, die relativ zu dem verbliebenen Brenngaszuführrohr teleskopartig verschiebbar ist, ist es möglich, in aufeinanderfolgenden Schritten zunächst den neuen Brennölzuführleitungsendabschnitt des neuen Swirlers mit der verbliebenen Brennölzuführleitung (Schritt h) und anschließend die Hülse mit dem verbliebenen Brenngaszuführrohr einerseits und mit dem axial von dem neuen Swirler vorstehenden neuen Brenngaszuführrohrendabschnitt andererseits (Schritt j) stoffschlüssig zu verbinden. Entsprechend können beim Austausch eines Swirlers Teile des Brenngaszuführrohrs und Teile der Brennölzuführleitung weiter verwendet werden, wodurch der Aufwand und die Kosten, die mit dem erfindungsgemäßen Austausch eines Swirlers einhergehen, moderat gestaltet werden können.

Gemäß einer Ausgestaltung der vorliegenden Erfindung weisen der in Schritt c) abgetrennte Endabschnitt des verbliebenen Brenngaszuführrohrs und die diesen ersetzende Hülse die gleiche Länge auf.

Vorteilhaft sind der in Schritt c) abgetrennte Endabschnitt des verbliebenen Brenngaszuführrohrs und die den abgetrennten Brenngaszuführrohrendabschnitt ersetzende Hülse konusförmig ausgebildet.

Bevorzugt werden die stoffschlüssigen Verbindungen in den Schritten h) und j) mittels Schweißen erzeugt, da auf diese Weise hochtemperaturfeste Verbindungen erzeugt werden. Alternativ können aber auch andere Verbindungsverfahren zum Einsatz kommen, wie beispielsweise das Hartlöten, um nur ein Beispiel zu nennen.

Vorteilhaft werden die in den Schritten h) und j) erzeugten Schweißnähte vorab einer Schweißnahtvorbereitung unterzogen.

Mit anderen Worten werden die zu verschweißenden Bereiche vor dem Erzeugen der Schweißnähte gereinigt und gegebenenfalls mechanisch bearbeitet, um die Herstellung ordnungsgemäßer Schweißnähte zu gewährleisten.

Gemäß einer Ausgestaltung der vorliegenden Erfindung steht der neue Brennölzuführleitungsendabschnitt von dem neuen Swirler weiter als der Brennölzuführleitungsendabschnitt von dem abgetrennten Swirler vor. Auf diese Weise kann vermieden werden, dass die neue Schweißverbindung im Bereich einer alten Schweißnaht liegt, was mit unerwünschten Materialeigenschaftsänderungen einhergehen kann. So kann beispielsweise der neue Brennölzuführleitungsabschnitt des neuen Swirlers 2 bis 5 mm weiter vorstehen als der Brennölzuführleitungsendabschnitt des abgetrennten Swirlers.

Weitere Merkmale und Vorteile der vorliegenden Erfindung werden anhand der nachfolgenden Beschreibung einer Ausführungsform eines erfindungsgemäßen Verfahrens unter Bezugnahme auf die beiliegende Zeichnung deutlich. Darin ist/sind
Figur 1 eine perspektivische Ansicht einer Brenneranordnung, die eine Vielzahl von Swirlern aufweist;
Figur 2 eine Seitenansicht der in Figur 1 dargestellten Brenneranordnung; und

Figuren 3 bis 8 Teilansichten der in den Figuren 1 und 2 dargestellten Anordnung, anhand derer einzelne Verfahrensschritte eines Verfahrens gemäß einer Ausführungsform der vorliegenden Erfindung erläutert werden.

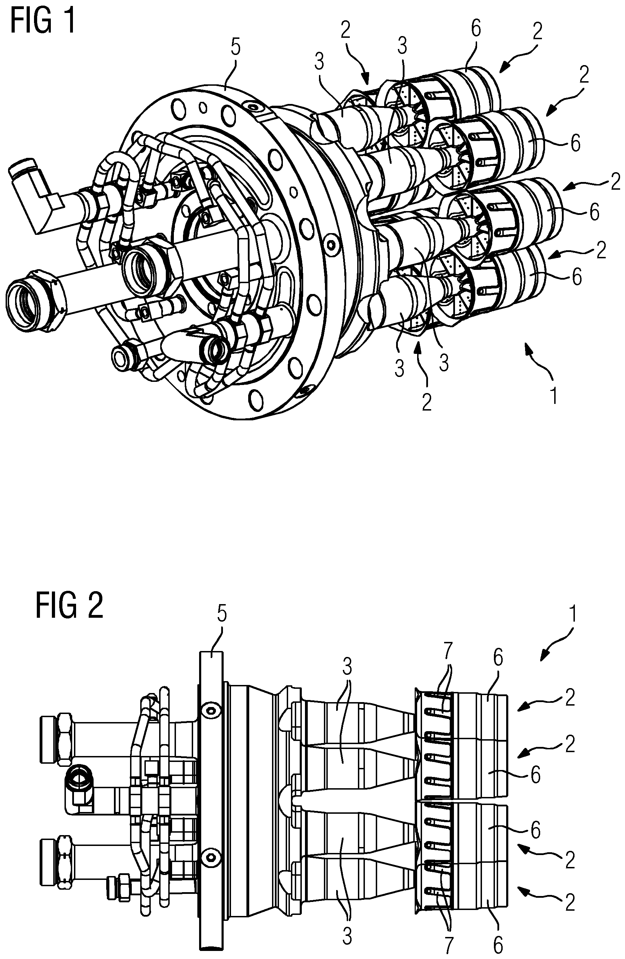

Die Figuren 1 und 2 zeigen eine Gasturbinenbrenneranordnung 1, die eine Vielzahl von Swirlern 2 aufweisen, wobei jeder Swirler 2 eine Komponente eines Vormisch- bzw. Hauptbrenners darstellt. Jeder Swirler 2 ist über ein Brenngaszuführrohr 3 und eine in diesem aufgenommene Brennölzuführleitung 4 an eine Verteilerflanschplatte 5 angeschlossen, über welche die Gasturbinenbrenneranordnung 1 an ein nicht näher dargestelltes Gasturbinengehäuse angeflanscht wird. Die Brenngaszuführrohre 3 und die Brennölzuführleitungen 4 sind über die Verteilerflanschplatte 5 in bekannter Weise an eine Brenngaszufuhr einerseits und eine Brennölzufuhr andererseits angeschlossen, worauf nachfolgend nicht näher eingegangen wird. Die Swirler 2 umfassen jeweils einen Außenring 6, der das freie Ende des zugehörigen Brenngaszuführrohrs 3 derart umgibt, dass zwischen dem Brenngaszuführrohr 3 und dem Außenring 6 ein ringförmiger Strömungskanal definiert wird. Ferner umfasst jeder Swirler 2 mehrere Swirlerschaufeln 7, die sich jeweils zwischen dem Brenngaszuführrohr 3 und dem Außenring 6 erstrecken. Auch wenn dies in den Figuren nicht dargestellt ist, sind sowohl die Brenngaszuführrohre 3 als auch die Brennölzuführleitungen 4 durch entsprechende Verbindungskanäle mit dem ringförmigen Strömungskanal verbunden, so dass wahlweise Brennöl und/oder Brenngas in den Strömungskanal eingespritzt werden kann. Während des Betriebs der Gasturbine wird durch die einzelnen Strömungskanäle der jeweiligen Swirler 2 verdichtete Verbrennungsluft geleitet, durch die Swirlerschaufeln 7 verwirbelt und mit Brennöl und/oder Brenngas vermischt.

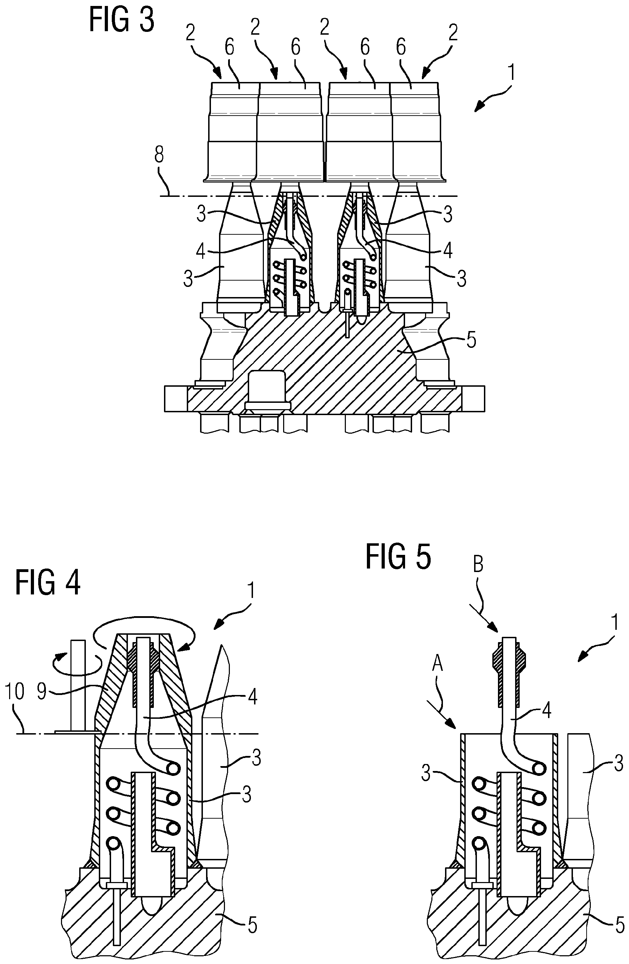

Die Swirler 2, die während des Gasturbinenbetriebs beschädigt wurden, müssen im Rahmen von Wartungs- bzw. Reparaturarbeiten durch neue Swirler ausgetauscht werden. Hierzu werden gemäß einer Ausführungsform eines erfindungsgemäßen Verfahrens mehrere Schritte durchgeführt, die nachfolgend unter Bezugnahme auf die Figuren 3 bis 8 beschrieben werden:
In einem ersten Schritt wird ein auszutauschender Swirler 2 abgetrennt, indem das zugehörige Brenngaszuführrohr 3 und die darin aufgenommene Brennölzuführleitung 4 entlang einer ersten Trennebene 8 durchtrennt werden, wie es in Figur 3 gezeigt ist. Der Trennschnitt kann beispielsweise unter Einsatz eines Erodierverfahrens durchgeführt werden.

In einem weiteren Schritt wird der abgetrennte Swirler 2 entfernt, wodurch sich die in Figur 4 dargestellte Anordnung ergibt. Nach dem Entfernen des abgetrennten Swirler 2 wird in einem weiteren Schritt ein sich konusförmig verjüngender Endabschnitt 9 des verbliebenen Brenngaszuführrohrs 3 abgetrennt, indem das verbliebene Brenngaszuführrohr 3 entlang einer zweiten Trennebene 10 durchtrennt wird, ohne dabei die innenliegende Brennölzuführleitung 4 zu durchtrennen. Zum Abtrennen des Endabschnitts 9 kann beispielsweise ein spanendes Verfahren eingesetzt werden, wie beispielsweise ein Durchtrennen mittels Trennscheibe oder dergleichen.

Der abgetrennte Endabschnitt 9 des Brenngaszuführrohrs 3 wird nunmehr entfernt, so dass sich die in Figur 5 dargestellte Anordnung ergibt. Anschließend werden die mit den Pfeilen A und B gekennzeichneten Flächen einer Schweißnahtvorbereitung unterzogen, also gereinigt und gegebenenfalls mechanisch bearbeitet.

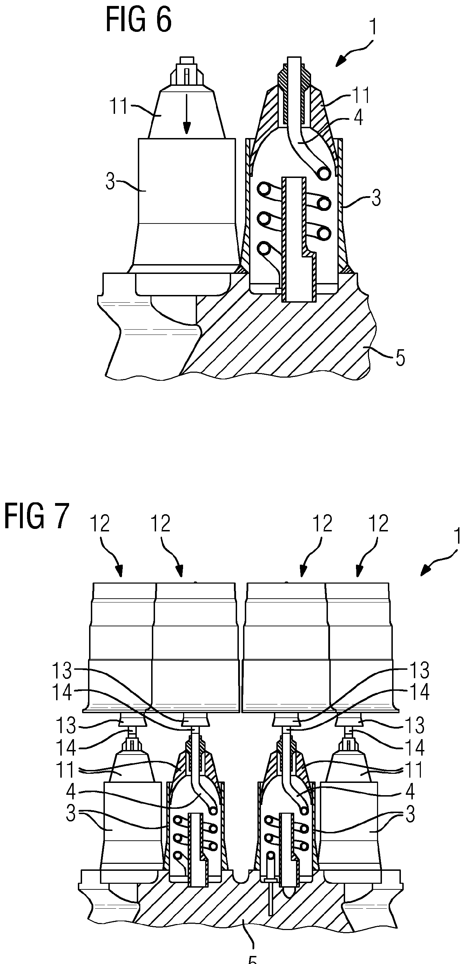

In einem weiteren Schritt wird eine den abgetrennten Endabschnitt 9 des Brenngaszuführrohrs 3 ersetzenden Hülse 11 bereitgestellt, die derart ausgebildet ist, dass sie zumindest teilweise in das verbliebene Brenngaszuführrohr 3 eingeschoben werden kann, wie es in Figur 6 dargestellt ist. Die Höhe und die Innenabmessungen der Hülse 11 entsprechen im Wesentlichen der Höhe und den Innenabmessungen des abgetrennten Endabschnittes 9 des Brenngaszuführrohrs 3, so dass die Hülse 11 während des späteren Gasturbinenbetriebs den abgetrennten Endabschnitt 9 des Brenngaszuführrohrs 3 ohne funktionale Einbußen ersetzt.

In einem weiteren Schritt wird die Hülse 11, wie es in Figur 6 dargestellt ist, in das verbliebene Brenngaszuführrohr 3 derart eingeschoben, dass die verbliebene Brennölzuführleitung 4 aufwärts von der Hülse 11 vorsteht.

Nunmehr wird ein neuer Swirler 12 bereitgestellt, von dem axial ein neuer Brenngaszuführrohrendabschnitt 13 und ein neuer Brennölzuführleitungsendabschnitt 14 vorstehen. Grundsätzlich weist der neue Swirler 12 den gleichen Aufbau wie der zuvor abgetrennte Swirler 2 auf. Lediglich der Brennölzuführleitungsendabschnitt 14 steht etwas weiter von dem neuen Brennölzuführrohrendabschnitt 13 vor, beispielsweise um ein Maß zwischen 2 und 5 mm.

Anschließend wird die verbliebene Brennölzuführleitung 4 mit dem von dem neuen Swirler 12 vorstehenden neuen Brennölzuführleitungsendabschnitt 14 stoffschlüssig verbunden, wie es in Figur 7 gezeigt ist, wozu vorliegend ein Schweißverfahren eingesetzt wird.

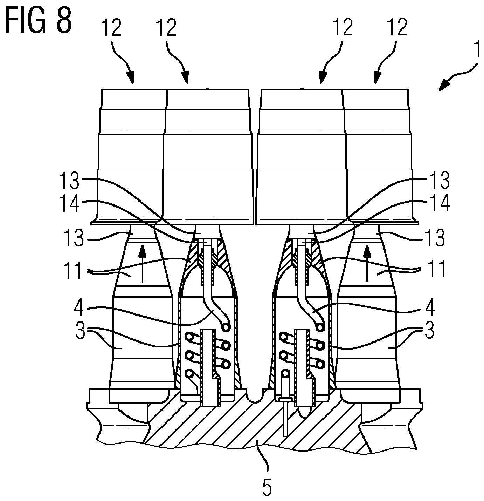

In einem weiteren Schritt wird gemäß Figur 8 die Hülse 11 zwischen dem verbliebenen Brenngaszuführrohr 3 und dem von dem neuen Swirler 12 vorstehenden neuen Brenngaszuführrohrendabschnitt 13 angeordnet und anschließend mit dem verbliebenen Brenngaszuführrohr 3 einerseits und mit dem axial von dem neuen Swirler 12 vorstehenden neuen Brenngaszuführrohrendabschnitt 13 andererseits stoffschlüssig verbunden. Auch hierzu wird wiederum ein Schweißverfahren eingesetzt.

Ein wesentlicher Vorteil des erfindungsgemäßen Verfahrens besteht darin, dass im Rahmen einer Swirlerreparatur nur der Swirler selbst und ein Endabschnitt des Brenngaszuführrohrs ausgetauscht werden müssen. Ein vollständiger Neuaufbau eines Brenners ausgehend von der alten Verteilerflanschplatte ist nicht erforderlich. Hierdurch gestaltet sich das erfindungsgemäße Verfahren wenig zeit- und kostenintensiv.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Austauschen eines Swirlers (2) eines Vormisch- oder Hautbrenners einer Brenneranordnung (1), wobei der Swirler (2) über ein Brenngaszuführrohr (3) und eine in diesem aufgenommene Brennölzuführleitung (4) an eine Verteilerflanschplatte (5) der Brenneranordnung (1) angeschlossen ist, umfassend die Schritte:
a) Abtrennen des Swirlers (2), indem das Brenngaszuführrohr (3) und die Brennölzuführleitung (4) entlang einer ersten Trennebene (8) nahe des Swirlers (2) durchtrennt werden;
b) Entfernen des abgetrennten Swirlers (2);
c) Abtrennen eines Endabschnittes (9) des verbliebenen Brenngaszuführrohrs (3), indem das verbliebene Brenngaszuführrohr (3) entlang einer zweiten Trennebene (10) durchtrennt wird, ohne dabei die Brennölzuführleitung (4) zu durchtrennen;
d) Entfernen des abgetrennten Endabschnittes (9) des Brenngaszuführrohrs (3);
e) Bereitstellen einer den in Schritt c) abgetrennten Endabschnitt (9) des Brenngaszuführrohrs (3) ersetzenden Hülse (11), die derart ausgebildet ist, dass sie zumindest teilweise auf das verbliebene Brenngaszuführrohr (3) aufgeschoben oder in dieses eingeschoben werden kann;
f) Anordnen der Hülse (11) auf oder in dem verbliebenen Brenngaszuführrohr (3);
g) Bereitstellen eines neuen Swirlers (12), von dem axial ein neuer Brenngaszuführrohrendabschnitt (13) und ein neuer Brennölzuführleitungsendabschnitt (14) vorstehen;
h) Stoffschlüssiges Verbinden der verbliebenen Brennölzuführleitung (4) mit dem von dem neuen Swirler (12) vorstehenden neuen Brennölzuführleitungsendabschnitt (14);
i) Anordnen der Hülse zwischen dem verbliebenen Brenngaszuführrohr (3) und dem von dem neuen Swirler (12) vorstehenden neuen Brenngaszuführrohrendabschnitt (13); und
j) Stoffschlüssiges Verbinden der Hülse (11) mit dem verbliebenen Brenngaszuführrohr (3) einerseits und mit dem axial von dem neuen Swirler (12) vorstehenden neuen Brenngaszuführrohrendabschnitt (12) andererseits.

2. Verfahren nach Anspruch 1, **dadurch gekennzeichnet, dass** der in Schritt c) abgetrennte Endabschnitt (9) des verbliebenen Brenngaszuführrohrs (3) und die diesen ersetzende Hülse (11) die gleiche Länge aufweisen.

3. Verfahren nach Anspruch 1 oder 2, **dadurch gekennzeichnet, dass** der in Schritt c) abgetrennte Endabschnitt (9) des verbliebenen Brenngaszuführrohrs (3) und die diesen ersetzende Hülse (11) konusförmig ausgebildet sind.

4. Verfahren nach einem der vorhergehenden Ansprüche, **dadurch gekennzeichnet, dass** die stoffschlüssigen Verbindungen in den Schritten h) und j) mittels Schweißen erzeugt werden.

5. Verfahren nach Anspruch 4, **dadurch gekennzeichnet, dass** die in den Schritten h) und j) erzeugten Schweißnähte vorab einer Schweißnahtvorbereitung unterzogen werden.

6. Verfahren nach einem der vorhergehenden Ansprüche, **dadurch gekennzeichnet, dass** der neue Brennölzuführleitungsendabschnitt (14) von dem neuen Swirler (12) weiter als der Brennölzuführleitungsendabschnitt (4) von dem abgetrennten Swirler (2) vorsteht.

## Claims

1. Method for replacing a swirler (2) of a premixing or main burner of a burner arrangement (1), wherein the swirler (2) is connected to a distributor flange plate (5) of the burner arrangement (1) via a fuel gas feed pipe (3) and a fuel oil feed line (4) accommodated therein, said method comprising the following steps:
a) separating the swirler (2) by severing the fuel gas feed pipe (3) and the fuel oil feed line (4) along a first parting plane (8) close to the swirler (2);
b) removing the separated swirler (2);
c) separating an end portion (9) of the remaining fuel gas feed pipe (3) by severing the remaining fuel gas feed pipe (3) along a second parting plane (10), without severing the fuel oil feed line (4) in the process;
d) removing the separated end portion (9) of the fuel gas feed pipe (3);
e) providing a sleeve (11), which replaces the end portion (9) of the fuel gas feed pipe (3) separated in step c) and which is formed in such a manner that it can be pushed at least partially onto the remaining fuel gas feed pipe (3) or can be pushed into the latter;
f) arranging the sleeve (11) on or in the remaining fuel gas feed pipe (3);
g) providing a new swirler (12), from which a new fuel gas feed pipe end portion (13) and a new fuel oil feed line end portion (14) protrude axially;
h) integrally connecting the remaining fuel oil feed line (4) to the new fuel oil feed line end portion (14) protruding from the new swirler (12);
i) arranging the sleeve between the remaining fuel gas feed pipe (3) and the new fuel gas feed pipe end portion (13) protruding from the new swirler (12); and
j) integrally connecting the sleeve (11) to the remaining fuel gas feed pipe (3) on the one hand and to the new fuel gas feed pipe end portion (12) protruding axially from the new swirler (12) on the other hand.

2. Method according to Claim 1, **characterized in that** the end portion (9) of the remaining fuel gas feed pipe (3) separated in step c) and the sleeve (11) which replaces it have the same length.

3. Method according to Claim 1 or 2, **characterized in that** the end portion (9) of the remaining fuel gas feed pipe (3) separated in step c) and the sleeve (11) which replaces it have a conical form.

4. Method according to one of the preceding claims, **characterized in that** the integral connections in steps h) and j) are produced by means of welding.

5. Method according to Claim 4, **characterized in that** the weld seams produced in steps h) and j) are subjected beforehand to weld seam preparation.

6. Method according to one of the preceding claims, **characterized in that** the new fuel oil feed line end portion (14) protrudes from the new swirler (12) further than the fuel oil feed line end portion (4) protrudes from the separated swirler (2).

## Revendications

1. Procédé de remplacement d'un swirler (2) d'un brûleur de prémélange ou d'un brûleur principal d'un système (1) de brûleur, le swirler étant, par un tuyau (3) d'apport de combustible gazeux et par un conduit (4) d'apport de pétrole reçu dans celui-ci, raccordé à une plaque (5) formant bride de répartiteur du système (1) de brûleur, comprenant les stades :
a) séparation du swirler (2), en séparant le tuyau (3) d'apport de combustible gazeux et le conduit (4) d'apport de pétrole le long d'un premier plan (8) de séparation près du swirler (2);
b) retrait du swirler (2) séparé;
c) séparation d'un tronçon (9) d'extrémité du tuyau (3) restant d'apport de combustible gazeux, en séparant le tuyau (3) restant d'apport de combustible gazeux le long d'un deuxième plan (10) de séparation, sans séparer ainsi le conduit (4) d'apport de pétrole;
d) retrait du tronçon (9) d'extrémité séparé du tuyau (3) d'apport de combustible gazeux;
e) mise à disposition d'un manchon (11) remplaçant le tronçon (9) d'extrémité, séparé dans le stade c), du tuyau (3) d'apport de combustible gazeux, manchon (11) qui est constitué de manière à pouvoir être enfilé, au moins en partie, sur le tuyau (3) restant d'apport de combustible gazeux ou à pouvoir être enfilé dans celui-ci;
f) montage du manchon (11) sur ou dans le tuyau (3) restant d'apport de combustible gazeux;
g) mise à disposition d'un swirler (12) nouveau, dont fait saillie axialement un nouveau tronçon (13) d'extrémité de tuyau d'apport de gaz combustible et un nouveau tronçon (14) d'extrémité de conduit d'apport de pétrole;
h) liaison à coopération de matière du conduit restant d'apport de pétrole au nouveau tronçon (14) d'extrémité de conduit d'apport de pétrole en saillie du swirler (12) nouveau;
i) montage du manchon entre le tuyau (3) restant d'apport de combustible gazeux et le nouveau tronçon (13) d'extrémité de tuyau d'apport de combustible gazeux en saillie du swirler (12) nouveau; et
j) liaison à complémentarité de matière du manchon (11) au tuyau (3) restant d'apport de combustible gazeux d'une part et au nouveau tronçon (12) d'extrémité de tuyau d'apport de combustible gazeux en saillie du swirler (12) nouveau d'autre part.

2. Procédé suivant la revendication 1, **caractérisé en ce que** le tronçon (9) d'extrémité, séparé au stade c) du tuyau (3) restant d'apport de combustible gazeux, et le manchon (11) le remplaçant ont la même longueur.

3. Procédé suivant la revendication 1 ou 2, **caractérisé en ce que** le tronçon (9) d'extrémité, séparé au stade c) du tuyau (3) restant d'apport de combustible gazeux, et le manchon (11) le remplaçant sont en forme de cône.

4. Procédé suivant l'une des revendications précédentes, **caractérisé en ce que** l'on produit les liaisons à coopération de matière aux stades h) et j) au moyen d'un soudage.

5. Procédé suivant la revendication 4, **caractérisé en ce que** l'on soumet les cordons de soudure produits aux stades h) et j) au préalable à une préparation de cordon de soudure.

6. Procédé suivant l'une des revendications précédentes, **caractérisé en ce que** le nouveau tronçon (14) d'extrémité de conduit d'apport de pétrole est en saillie du swirler (12) nouveau, davantage que ne l'est le tronçon (4) d'extrémité du conduit d'apport de pétrole du swirler (2) séparé.
